Europäisches Patentamt

European Patent Office

Office européen des brevets

(11) Veröffentlichungsnummer: **0 004 254**
A1

(12) **EUROPÄISCHE PATENTANMELDUNG**

(21) Anmeldenummer: 79810023.6

(22) Anmeldetag: 07.03.79

(51) Int. Cl.²: **G 01 L 5/00**
**B 66 C 23/90, G 01 L 1/22**
**G 08 B 21/00**

(30) Priorität: 08.03.78 DE 7807036 U

(43) Veröffentlichungstag der Anmeldung:
19.09.79 Patentblatt 79/19

(84) Benannte Vertragsstaaten:
DE FR GB

(71) Anmelder: VIBRO-METER SA
Route de Moncor 4
CH-1700 Fribourg(CH)

(72) Erfinder: Spescha, Gelli, Dr.
Route des Dailles 11
CH-1752 Villars-sur-Glâne(CH)

(72) Erfinder: Britze, Klaus Joachim, Dr.
Osthofener Weg 5
D-1000 Berlin 38(DE)

(72) Erfinder: Loos, Horst-Rudolf, Dr.
Route de Moncor 13
CH-1752 Villars-sur-Glâne(CH)

(74) Vertreter: STEINER, Martin et al,
c/o AMMANN PATENTANWAELTE AG BERN
Schwarztorstrasse 31
CH-3001 Bern(CH)

(54) Vorrichtung zur Messung des auf eine Arbeitsmaschine wirkenden Lastmomentes zwecks Anzeige und/oder eventueller Auslösung eines Alarms.

(57) Die Vorrichtung dient der Messung des auf eine Arbeitsmaschine, insbesondere ein Hebezeug wirkenden Lastmomentes. An der Schwenkstelle (3, 8) entweder eines Lastarms (2, 4) oder eines Betätigungsgliedes (6) für denselben am Maschinengestell wird die Komponente (N, N') der dort übertragenen Kraft (K) ermittelt, die rechtwinklig zu der durch die beiden Schwenkachsen (3, 8) bestimmten Ebene (E) steht. Diese Komponente ist ein direktes Mass für das Lastmoment. In einer bevorzugten Ausführung dient einer der Schwenkbolzen (8) zugleich als Messbolzen, indem an ihm Dehnungsmess-streifen (12) angebracht sind.

FIG.1

FIG.3

- 1 -

Vorrichtung zur Messung des auf eine Arbeitsmaschine wirkenden Lastmomentes zwecks Anzeige und/oder eventueller Auslösung eines Alarms.

Die vorliegende Erfindung betrifft eine Vorrichtung zur
Messung des Lastmomentes, das auf eine Arbeitsmaschine,
insbesondere ein Hebezeug mit einem schwenkbar gelagerten
Lastarm und einem mit dem Lastarm und dem Maschinengestell
je gelenkig verbundenen Betätigungsglied, z.B. einem hydraulischen Zylinder, wirkt. Die Messung des auf Arbeitsmaschinen wirkenden Lastmomentes ist insbesondere wichtig bei
Kranen und als Krane eingesetzten Baumaschinen, beispielsweise Raupenbaggern und dergleichen. Da die Last meist unbekannt ist und die Ausladung des Lastarmes in relativ
weiten Grenzen variieren kann, ist eine genügend genaue
Messung des auf die Arbeitsmaschine wirkenden Lastmomentes
recht umständlich. Bekannte Messvorrichtungen arbeiten mit
mehreren Messeinrichtungen, die beispielsweise die Last
und die Neigung eines oder mehrerer Glieder des Lastarmes
erfassen und in einer elektronischen Rechenvorrichtung
auswerten.

Es ist das Ziel der vorliegenden Erfindung, eine Messvorrichtung vorzusehen, welche mit ausserordentlich einfachen Mitteln und ohne jede Verdrahtung an beweglichen Teilen des
Lastarmes auszukommen gestattet. Dieses Ziel wird dadurch
erreicht, dass an einer Schwenkachse, nämlich entweder derjenigen des Lastarms oder derjenigen des Betätigungsgliedes eine Messeinrichtung zur Messung einer in bestimmter Richtung bezüglich des Maschinengestells stehenden Komponente (N, N') der in dieser Schwenkachse angreifenden Kraft angeordnet ist. Vorzugsweise ist die Messvorrichtung zur Messung der rechtwinklig zu der durch die Schwenkachsen des Lastarmes und des Betätigungsgliedes am Maschinengestell bestimmten Ebene stehende Komponente der in einer dieser Achsen übertragenen Kraft ausgebildet ist. Es wird unten gezeigt, dass mit einer solchen äusserst einfachen Messung das wirkende Lastmoment genügend genau ermittelt werden kann, um eine Anzeige und bei eventueller Ueberlastung einen Alarm zu betätigen.

Die Erfindung wird nun anhand der Zeichnung näher erläutert.

Fig. 1 zeigt schematisch einen Raupenbagger in Seitenansicht,

Fig. 2 zeigt einen stark vergrösserten Teilschnitt nach Linie II-II in Fig. 3, und

Fig. 3 zeigt einen Schnitt nach Linie III-III in Fig.2.

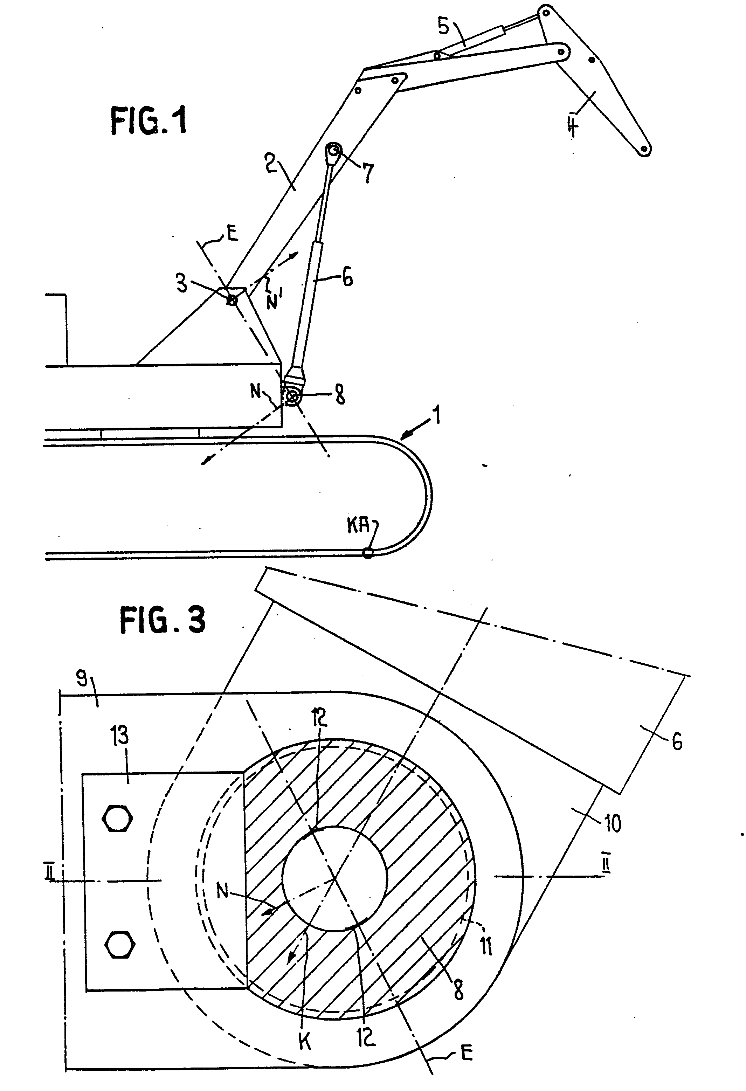

Der in Fig. 1 schematisch dargestellte Raupenbagger 1 weist einen Lastarm auf, dessen innerer Teil 2 um einen Gelenkbolzen 3 am Baggergestell schwenkbar gelagert ist. Mit dem äusseren Ende des Armteils 2 ist ein äusserer Armteil 4 schwenkbar verbunden, der mittels eines hydraulischen Zylinders 5 gegenüber dem Armteil 2 verschwenkt werden kann. Am äusseren Ende des Armteils 4 kann wahlweise ein beliebiges Arbeitswerkzeug, beispielsweise eine Baggerschaufel, ein Haken oder dergleichen, angebracht werden.

Mit dem Teil 2 des Lastarms und dem Baggergestell ist ein hydraulisches Betätigungsglied 6 verbunden, mittels welchem

0004254

der Teil 2 des Lastarms in einem verhältnismässig weiten Bereich verschwenkt werden kann. Sowohl die Kolbenstange als auch der Zylinder des Betätigungsgliedes 6 sind je mittels eines Bolzens 7 bzw. 8 am Teil 2 des Lastarms bzw. am Baggergestell schwenkbar gelagert.

Genaugenommen müsste ermittelt werden, welches Lastmoment bezogen auf die Kippachse oder Kippstelle KA des Baggers wirkt. In der Praxis genügt jedoch eine Messung bezogen auf eine andere Stelle, wobei Abweichungen des gemessen vom zulässigen Lastmoment bei der Eichung der Anzeige teilweise berücksichtigt werden können. Der erfindungsgemässen Messung des Lastmomentes wird nun die Ueberlegung zugrundegelegt, dass eine Ermittlung des Lastmomentes bezogen auf eine der Schwenkachsen 3 oder 8 besonders einfach dadurch vorgenommen werden kann, dass die in der anderen Schwenkachse auftretende, normal zu der durch die beiden Schwenkachsen bestimmten Ebene stehende Komponente N bzw. N' der angreifenden Kraft gemessen und multipliziert wird mit dem Abstand der beiden Schwenkachsen. Die übertragenen Kräfte bzw. deren Normalkomponenten N bzw. N' sind nicht gleich gross, da die Lastmomente bezogen auf die Schwenkachsen 3 und 8 nicht gleich gross sind. In Fig. 3 ist die Situation für den Schwenkzapfen 8 noch etwas genauer dargestellt. Ueber den Schwenkzapfen 8 wird die Kraft K übertragen, welche in Richtung der Längsachse des Betätigungsgliedes 6 liegt. Die für das Lastmoment massgebende Normalkomponente zur Ebene E dieser Kraft ist mit N bezeichnet. Das Produkt aus dieser Kraft mit dem Abstand zwischen den Schwenkzapfen 3 und 8 ergibt das Lastmoment bezogen auf den Schwenkzapfen 3. Es genügt also, eine der Normalkomponenten N oder N' zu ermitteln, und die Anzeige dieser Normalkomponente kann bei entsprechender Eichung als Anzeige des bezogen auf den Schwenkzapfen 3 bzw. 8 angreifenden Lastmomentes gelten. Auf dem Anzeigeinstrument kann ferner eine Gefahrenmarke oder Gefahrenzone aufgetragen sein, und es kann zusätzlich bei Erreichen eines vorgegebenen Grenzwertes ein Alarm ausgelöst werden.

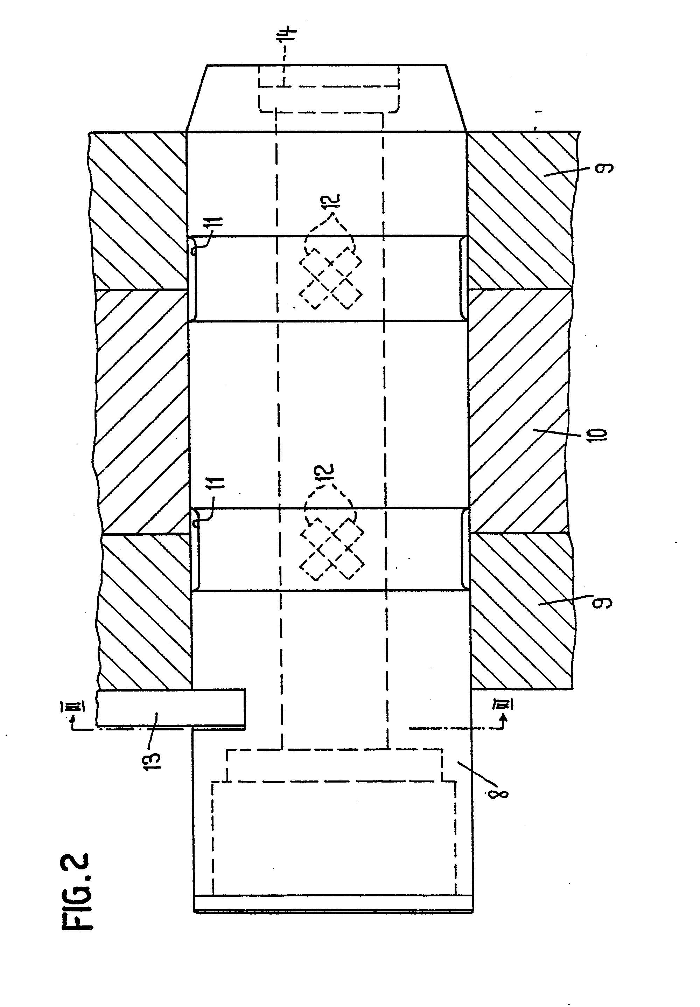

Die Figuren 2 und 3 zeigen deutlicher, wie die Messeinrichtung zur Erfassung der beim Gelenkbolzen 8 wirkenden Normalkraft N ausgebildet ist. Zur Ermittlung dieser Kraft ist der Gelenkbolzen 8 selbst als hohler Scherungsmessbolzen ausgebildet. Zwischen den mit dem Baggergestell verbundenen Augen 9 und den mit dem Betätigungsglied 6 verbundenen Auge 10 weist der Bolzen 8 Abschnitte 11 verminderten Aussendurchmessers auf, in welchen keine Kräfte zwischen diesen Bolzen und den Augen 9 oder 10 übertragen werden können. In diesen Abschnitten wirken somit die vollen, durch die Uebertragung der Kräfte im Bolzen wirkenden Scherkräfte. Diese Scherkräfte werden gemessen durch im Bereiche der Abschnitte 11 angebrachte, unter $45^{\circ}$ zur Bolzenachse stehende Dehnungsmessstreifen 12, die in an sich bekannter Weise in eine Vollbrücke geschaltet sind. Wie Fig. 3 zeigt, liegen die Dehnungsmessstreifen symmetrisch zur Ebene E, d.h. die senkrecht zur Ebene E wirkende Komponente N der durch den Bolzen 8 übertragenen Kraft K wirkt sich voll in einer Deformation der Dehnungsmessstreifen 12 aus, während die dazu senkrecht stehende Komponente der übertragenen Kraft, also die parallel zur Ebene E wirkende Kraftkomponente, sich auf die Dehnungsmessstriefen praktisch überhaupt nicht auswirkt. Es wird also richtigerweise nur die Normalkomponente N der übertragenen Kraft gemessen. Wie die Fig. 2 und 3 zeigen, wird der Bolzen 8 durch eine Sicherungsplatte 13 in bestimmter Lage bezüglich des Baggergestelles gehalten, d.h. die Dehnungsmessstreifen 12 sind immer in der Ebene E gehalten und können nicht aus derselben verdreht werden. Wie Fig. 2 zeigt, ist das eine Ende der Bohrung des Gelenkzapfens 8 mit einem Stopfen 14 abgeschlossen, während die Bohrung am anderen Ende des Bolzens erweitert ist und dort die nicht dargestellten Anschlüsse für die Dehnungsmessstreifen 12

- 5 -

0004254

aufnimmt.

Es sind verschiedene Ausführungsvarianten der dargestellten Vorrichtung möglich. Anstatt den Bolzen 8 als Messbolzen gemäss Fig. 2 und 3 auszubilden, kann ein entsprechender Bolzen als Gelenkbolzen 3 eingesetzt werden zur Messung der Normalkomponente N' der durch den Teil 2 des Lastarmes übertragenen Kraft. In beiden Fällen ergibt sich der erhebliche Vorteil, dass alle Teile der Messvorrichtung fest mit dem Baggergestell bzw. einem anderen Maschinengestell verbunden sein können. Es sind also keine flexiblen, über bewegliche Teile der Maschine zu führende Kabel erforderlich. Der Messbolzen dient direkt auch als mechanisches Maschinenelement. Es ergibt sich damit eine äusserst einfache Messvorrichtung.

Die dargestellte und beschriebene Messvorrichtung ist nicht auf Bagger oder ähnliche Hebezeuge der dargestellten Art beschränkt, sondern kann überall dort zur Anwendung gelangen, wo ausladende, bewegliche Maschinenteile unterschiedliche, meist unbekannte Lasten aufzunehmen haben. Insbesondere ist die Messvorrichtung überall dort von besonderem Interesse, wo nicht nur die Last sondern auch die Ausladung des Lastarmes unbekannt oder variabel sind. Die Messvorrichtung ist auch dort anwendbar, wo das Betätigungsglied auf Zug und nicht auf Druck beansprucht ist.

Häufig weisen Bagger oder ähnliche Geräte der dargestellten Art nicht nur ein Betätigungsglied, sondern zwei parallel geschaltete Betätigungsglieder auf. Da diese Glieder meist symmetrisch angeordnet sind und mit dem gleichen hydraulischen Druck betätigt werden, übertragen sie auch praktisch gleiche Kräfte und es genügt in diesem Falle, in einem der Schwenkpunkte 8 die Normalkraft N zu ermitteln, um das Lastmoment bezüglich des Lastarmdrehpunktes 3 zu bestimmen.

Während die Messung der Normalkraft N bzw. N' mit der dargestellten und beschriebenen Vorrichtung äusserst einfach und elegant ist, sind auch andere Messvorrichtungen denkbar. So kann beispielsweise der Schwenkbolzen 8 des Betätigungsgliedes 6 oder aber der Schwenkbolzen 3 des Lastarmes auf einer Lastmesszelle montiert sein, deren Empfindlichkeitsachse senkrecht zur Ebene E liegt.

Wenn damit gerechnet werden kann, dass immer nur senkrecht wirkende Lasten angreifen, was z.B. bei einem Kran zutreffen kann, müssen in den beiden Schwenkachsen 3 und 8 gleich grosse und entgegengesetzt gerichtete Horizontalkomponenten der übertragenen Kräfte auftreten, da ja am ganzen beweglichen System keine äusseren Horizontalfräfte angreifen. In diesem Falle kann das Lastmoment auch dadurch ermittelt werden, dass in einer der Schwenkachsen bzw. Schwenkstellen 3 oder 8 die Horizontalkomponente der übertragenen Kraft gemessen und diese Komponente mit dem vertikalen Abstand der beiden Schwenkachsen multipliziert wird.

0004254

- 1 -

Patentansprüche:

1. Vorrichtung zur Messung des Lastmomentes, das auf eine Arbeitsmaschine, insbesondere ein Hebezug mit einem schwenkbar gelagerten Lastarm, und einem mit dem Lastarm und dem Maschinengestell je gelenkig verbundenen Betätigungsglied, z.B. einem hydraulischen Zylinder, wirkt, dadurch gekennzeichnet, dass an einer Schwenkachse, nämlich entweder derjenigen (3) des Lastarmes (2) oder derjenigen (8) des Betätigungsgliedes (6) eine Messeinrichtung zur Messung einer in bestimmter Richtung bezüglich des Maschinengestells stehenden Komponente (N, N') der in dieser Schwenkachse angreifenden Kraft angeordnet ist.

2. Vorrichtung nach Anspruch 1, dadurch gekennzeichnet, dass die Messeinrichtung (8, 12) zur Messung der rechtwinklig zu der durch die Schwenkachsen (3, 8) des Lastarms (2) und des Betätigungsgliedes (6) am Maschinengestell bestimmten Ebene (E) stehenden Komponente (N, N') der in einer dieser Achsen übertragenen Kraft ausgebildet ist.

3. Vorrichtung nach Anspruch 1 oder 2, dadurch gekennzeichnet,

0004254

dass die Messeinrichtung eine Anzeige und/oder einen Alarm steuert.

4. Vorrichtung nach Anspruch 1,
dadurch gekennzeichnet,
dass als Messvorrichtung ein auf Scherung beanspruchter Gelenkbolzen (8) vorgesehen ist, der mit Messelementen (12) besetzt ist.

5. Vorrichtung nach Anspruch 4,
dadurch gekennzeichnet,
dass der Gelenkbolzen (8) mit dem Maschinengestell drehfest verbunden ist.

6. Vorrichtung nach Anspruch 4 oder 5,
dadurch gekennzeichnet,
dass als Messelemente Dehnungsmesstreifen (12) vorgesehen sind, und dass jeder Dehnungsmesstreifen mindestens annähernd symmetrisch zur erwähnten Ebene (E) angeordnet ist.

7. Vorrichtung nach einem der Ansprüche 1 bis 6, mit zwei Betätigungsgliedern,
dadurch gekennzeichnet,
dass nur bei der Schwenkachse eines der Betätigungsglieder eine Messeinrichtung vorgesehen ist.

8. Vorrichtung nach Anspruch 1,
dadurch gekennzeichnet,
dass ein Gelenkbolzen (3, 8) des Lastarms (2) oder des Betätigungsgliedes (6) am Maschinengestell mittels einer Kraftmessungsdose abgestützt ist, deren Empfindlichkeitsachse senkrecht zur erwähnten Ebene (E) steht.

FIG.1

FIG. 3

FIG.2

13

11

11

12

12

14

8

9

10

9

**Europäisches Patentamt**

# EUROPÄISCHER RECHERCHENBERICHT

Nummer der Anmeldung

EP 79 810 023.6

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - B - 1 810 641 (L. PIETZSCH) <br> * Anspruch 1 * <br> — | 1,2 |
| X | US - A - 3 695 096 (A.U. KUTSAY) <br> * Spalte 1; Anspruch 1; <br> Ansprüche 2,5,6; Fig. 6 * <br> — | 1,4-6 |
| | DE - A - 2 127 897 (CARL METZ GMBH) <br> *Ansprüche 1, 10, 12 * <br> — | 3,8 |
| | DE - A - 2 650 442 (S.A. FRANÇAISE <br> DU FERODO) <br> * Anspruch * <br> — | 1 |
| | DE - B - 1 227 215 (ORENSTEIN-KOPPEL <br> UND LÜBECKER MASCHINENBAU AG) <br> * Anspruch 1 * <br> — | 3 |
| | DE - B-2 138 806 ( L. PIETZSCH) <br> *Ansprüche 1 bis 6 * <br> — | 8 |
| P | DE - A - 2 802 947 ( S.A. FRANÇAISE <br> DU FERODO) <br> * Anspruch 1 * <br> —— | 1,4,6 |

### KLASSIFIKATION DER ANMELDUNG (Int.Cl.³)

G 01 L 5/00
B 66 C 23/90
G 01 L 1/22
G 08 B 21/00

### RECHERCHIERTE SACHGEBIETE (Int. Cl.³)

B 66 C 15/00
B 66 C 23/90
G 01 L 1/22
G 01 L 3/00
G 01 L 5/00
E 02 F 9/24
E 02 F 9/26

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| Berlin | 30-05-1979 | KÖHN |

EPA form 1503.1  06.78